# EUROPÄISCHE PATENTSCHRIFT

(11) **EP 0 511 194 B1**
(45) Veröffentlichungstag und Bekanntmachung des Hinweises auf die Patenterteilung: **19.07.1995**
(21) Anmeldenummer: 92890088.5
(22) Anmeldetag: 09.04.1992
(51) Int. Cl.: C21C 5/56, C22B 1/00

(54) **Verfahren zum Schmelzen von Schrott sowie Vorrichtung zur Durchführung dieses Verfahrens**
Process for melting of scrap and installation for performing said process
Procédé pour la fusion de ferrailles et installation pour la mise en oeuvre de ce procédé

(30) Priorität: 17.04.1991 AT 806/91
(43) Veröffentlichungstag der Anmeldung: 28.10.1992
(73) Patentinhaber: VOEST-ALPINE INDUSTRIEANLAGENBAU GMBH, 4020 Linz (AT); MERCEDES-BENZ AG, 70327 Stuttgart (DE)
(72) Erfinder: Nieder, Wolfgang, Dipl. Ing., A-4040 Linz (AT); Seirlehner, Leo, Dipl. Ing., A-4040 Linz (AT); Winkler, Manfred, A-4050 Traun (AT); Perchtold, Gerhard, A-1050 Wien (AT)
(74) Vertreter: Haffner, Thomas M., Dr.

(56) Entgegenhaltungen:
- EP-A- 0 291 701
- EP-A- 0 364 865
- EP-A- 0 470 066
- DE-B- 2 504 889

## Beschreibung

Die Erfindung bezieht sich auf ein Verfahren zum kontinuierlichen Schmelzen von Schrott unter Verwendung von Shredderschrott in einem Schachtofen, wobei das Metallbad und die Schlacke einem Raffinationsprozeß zugeführt werden und die heißen Abgase des Raffinationsprozesses einer Vorwärmzone des Schachtofens zugeführt werden, sowie auf eine Vorrichtung zur Durchführung dieses Verfahrens mit einem als Schachtofen ausgebildeten Schmelzreaktor und einem dem Schlacken- und Badabstich nachgeschalteten Raffinator, wobei eine Gasrückführungsleitung für Abgase des Raffinators in den Schachtofen mündet.

Zum Einschmelzen von Schrott ist es aus der DE-PS 25 04 889 bereits bekanntgeworden, einen Schachtofen mit im wesentlichen gleichbleibenden Querschnitt im Gegenstrom durch Beaufschlagung der Einsatzmaterialsäule von unten mit einer mittels Brennstoff-Sauerstoffverbrennung erzeugten Flamme zu beheizen, wobei ein reduzierender Bereich unterhalb der oxidierenden Einschmelzzone durch Beimischen von reaktionsträgen, großen Kohlenstücken zum Einsatzmaterial erzeugt wird. Bei einer derartigen Verfahrensweise kann Shreddermüll nicht ohne aufwendige Gasreinigungsverfahren eingesetzt werden und ein derartiges Verfahren eignet sich daher in erster Linie für mehr oder minder reinen Schrott.

Ein Verfahren sowie eine Vorrichtung zum Erschmelzen von Stahl aus Schrott und/oder metallhaltigen, müllähnlichen Stoffen sind beispielsweise der EP-A 0 470 066 (veröffentlicht am 5.2.1992) zu entnehmen, wobei die Metallträger in einem Festbett vorgewärmt und aufgeschmolzen werden sowie sauerstoffhaltige Gase über wenigstens eine Sekundärdüsenehene im Bereich des Festbettes eingedüst werden. Das Abgas des Festbettreaktors wird bei dieser bekannten Ausführung einem Thermoreaktor zugeführt und nach Verlassen des Thermoreaktors über wenigstens ein Filter geleitet und weiters einer Rauchgasreinigung unterworfen. Das Metallbad und die Schlacke werden einem nachgeschalteten Überhitzungs- und/oder Raffinationsaggregat zugeführt, wobei Abgase dieses Aggregates einer Vorwärmzone des Schmelzreaktors oder dem Thermoreaktor zugeführt werden. Das bekannte Verfahren zielt hierbei darauf ab, die Beseitigung von Schadstoffen aus dem Abgas zu erleichtern.

Insbesondere für das kontinuierliche Einschmelzen von Ausgangsmaterial unterschiedlicher Zusammensetzung und gegebenenfalls hohen Schadstoffanteilen kann mit einem Schmelzreaktor oder einem Festbettreaktor kein unmittelbar verwertbares Produkt erzielt werden und es ist eine mehr oder minder aufwendige Raffination der Schmelze und des Bades erforderlich, um ein wiederverwertbares Produkt zu erhalten. Die Erfindung zielt nun darauf ab, ein Verfahren der eingangs genannten Art dahingehend weiterzubilden, daß Schrott unterschiedlicher Zusammensetzung, insbesondere auch schadstoffhältiger Schrott, bei gleichzeitiger Verbesserung der Energiebilanz und Verringerung der einer Reinigung zuzuführenden Prozeßgasmenge kontinuierlich eingeschmolzen werden kann. Zur Lösung dieser Aufgabe besteht das erfindungsgemäße Verfahren im wesentlichen darin, daß der Shredderschrott oberhalb der Schmelzzone über eine Schleuse eingetragen wird, daß die heißen Abgase des Raffinationsprozesses oberhalb der Schleuse für die Aufgabe des Shredderschrottes in den Vorwärmschacht für Reinschrott rückgeführt werden, daß der Reinschrott über den Vorwärmschacht in die Schmelzzone eingebracht wird und daß die Prozeßgase des Schmelzprozesses unterhalb des Vorwärmschachtes abgezogen werden. Unter Shredderschrott wird in diesem Zusammenhang beispielsweise das bei der Entsorgung von Konsumgütern, wie beispielsweise Autos, gewonnene Material verstanden, welches je nach Qualität der Abtrennung der Leichtfraktion in erster Linie eine Shredderschwerfraktion und gegebenenfalls mehr oder minder große Anteile einer Shredderleichtfraktion enthält. Derartige Ausgangsmaterialien führen beim Einschmelzprozeß zu einer relativ großen Schadstoffmenge im Prozeßgas, wobei insbesondere durch im Shredderschrott enthaltene Kunststoffe, wie beispielsweise Kunststoffbeschichtungen od.dgl., die Gefahr der Bildung von Dioxinen relativ groß ist. Dadurch, daß nun Shredderschrott über einen von der Zufuhr von Reinschrott gesonderten Weg aufgegeben wird, und gesonderte Gaswege für das entstehende Prozeßgas und das für die Vorwärmung des Reinschrottes eingesetzten, heißen Abgases gewählt werden, wird die Menge an kontaminierten Prozeßgas verringert, wobei dadurch, daß für die Vorwärmung des Reinschrottes die heißen Abgase des Raffinationsprozesses herangezogen werden, eine Verbesserung der Energiebilanz durch Ausnützung der latenten Wärme dieser heißen Abgase erzielt wird. Dadurch, daß die heißen Abgase des Raffinationsprozesses oberhalb der Schleuse für die Aufgabe des Shredderschrottes in den Vorwärmschacht für Reinschrott rückgeführt werden, wird darüberhinaus die Möglichkeit geschaffen, die Druckbedingungen im Schmelzreaktor und im Vorwärmschacht in einer Weise zu steuern, daß kontaminierte Prozeßgase selektiv an einer Stelle unterhalb des Vorwärmschachtes abgezogen werden können, wofür mit Vorteil das Verfahren so durchgeführt wird, daß der Gasdruck über dem Metallbad in der Schmelzzone geringer gehalten wird als der Gasdruck der in den Vorwärmschacht rückgeführten Abgase des Raffinationsprozesses. Mit einem derartigen Überdruck der aus dem Raffinator abgezogenen heißen Abgase wird erreicht, daß diese heißen Abgase in einem ersten Kreislauf und Passieren der darüberliegenden Reinschrottsäule und Aufwärmung dieses Reinschrottes als entsprechend gekühltes Abgas wieder abgezogen werden können und zum anderen in Richtung zu dem auf geringerem Druckniveau gehaltenen Schmelzreaktor gelangen und dort gleichfalls eine Kühlung der heißen Prozeßgase bewirken. Bedingt durch die unterschiedliche Zusammensetzung von Shredderschrott und die Schmelzbedingungen im Schmelzreaktor, kann der Schmelzreaktor mit relativ hoher Temperatur betrieben werden, wobei insbesondere bei Temperaturen von 2000 °C oder darüber mit einem nennenswerten Anteil an freiem Sauerstoff im Prozeßgas gerechnet werden muß. Um gleichzeitig mit einer effizienten Kühlung der heißen Prozeßgase auch eine nachfolgend weitestgehende Umsetzung zu CO₂ zu erzielen, wird mit Vorteil das Verfahren so betrieben, daß der Schachtofen im Bereich der Schmelzzone mit unterstöchiometrischen Brennern betrieben wird und daß im Bereich der Schleuse für die Aufgabe des Shredderschrottes Sekundärluft zur Kühlung der Prozeßgase und nachfolgenden Umsetzung zu CO₂ zugeführt wird.

Zur Aufrechterhaltung der gewünschten Druckverhältnisse und um sicherzustellen, daß kontaminierte Prozeßgase nicht über die Reinschrottcharge in die Abgasleitung gelangen, wird das Verfahren mit Vorteil so durchgeführt, daß die Prozeßgase oberhalb des Schmelzbades aus der Schmelzzone abgesaugt werden, daß aus dem Vorwärmschacht am oberen Ende Abgase abgesaugt werden und daß die Abgase des Raffinationsprozesses in den Vorwärmschacht zwischen den Absaugstellen rückgeführt werden. Auf diese Weise wird die gewünschte Aufteilung des Abgasstromes und der weitestgehend inerten heißen Abgase des Raffinationsprozesses in der oben beschriebenen Weise sichergestellt, wobei mit Vorteil die Druckdifferenzregelung für die Aufrechterhaltung eines höheren Gasdruckes der in den Vorwärmschacht rückgeführten Abgase prioritär gegenüber der Regelung der Sekundärluftzuführung zur Erzielung stöchiometrischer oder überstöchiometrischer Bedingungen im Prozeßgas gefahren wird.

Bei der erfindungsgemäßen Verfahrensweise wird in den Vorwärmschacht nur Reinschrott aufgegeben, wodurch die Bildung von halogenierten Kohlenwasserstoffen im am Kopf des Vorwärmschachtes abgezogenen Abgas vermieden wird.

Den heißen Abgasen des Raffinators kann bei hohen Austrittstemperaturen zum Zwecke der Kühlung Falschluft zugesetzt werden, wobei eine derartige Zufuhr von Falschluft unter Verwendung eines Kompressors zur Regelung der gewünschten Temperatur und Druckverhältnisse vorgenommen werden kann. Auf diese Weise kann ein einfaches Gebläse verwendet werden, welches nur niedrigen Gastemperaturen ausgesetzt ist. Das durch Zusatz von Falschluft auf Überdruck gebrachte heiße Abgas, welches gleichzeitig entsprechend abgekühlt wurde, dient in der Folge der Vorwärmung des Reinschrottes, welcher über ein Doppelschleusensystem durch den Vorwärmschacht nach unten befördert werden kann und auf diese Weise den Innendruck im eigentlichen Schmelzreaktor nicht beeinflußt. Am Kopf der Vorwärmzone wird das durch Aufwärmen des Reinschrottes abgekühlte Abgas abgezogen, welches weiterhin weitgehend als Inertgas zu bezeichnen ist, wobei die chemische Energie des Raffinatorgases vollständig und die latente Wärmemenge der heißen Abgase weitestgehend ausgenutzt wurde. Für diese Abgase ist eine weniger aufwendige Abgasreinigung erforderlich. Das Doppelschleusensystem für das Niederbringen der Reinschrottbeschickung kann aus einer Kombination von Gabeln und dichten Böden bestehen, wodurch die gewünschten Druckdifferenzen sicher aufrechterhalten werden können.

Das aus dem Schmelzreaktor über den Schlacken- und Badabstich abgezogene flüssige Material kann entsprechend den Erfordernissen entschwefelt, entphosphort, reduziert, überhitzt und gegebenenfalls auch in bezug auf den Badkohlenstoffgehalt entsprechend eingestellt werden, wobei die Beheizung des Raffinators über Bodendüsen beispielsweise mittels Kohle und Sauerstoff erfolgen kann. Eine gegebenenfalls zusätzliche Beheizung kann im Raffinator auch noch über dem Schmelzenspiegel erfolgen, wodurch die gewünschte zu leistende metallurgische Arbeit im Raffinator rasch unterschiedlichen Bad- und Schlackenzusammensetzungen angepaßt werden kann.

Die erfindungsgemäße Vorrichtung zur Durchführung dieses Verfahrens mit einem als Schachtofen ausgebildeten Schmelzreaktor und einem dem Schlacken- und Badabstich nachgeschalteten Raffinator, wobei eine Gasrückführungsleitung für Abgase des Raffinators in den Schachtofen mündet, ist im wesentlichen dadurch gekennzeichnet, daß der obere Bereich des Schachtofens als Vorwärmschacht für Reinschrott ausgebildet ist, daß unterhalb des Vorwärmschachtes wenigstens eine Schleuse für das Einbringen von Shredderschrott und eine Prozeßgasabführungsleitung angeschlossen ist und daß die Gasrückführungsleitung mit dem Vorwärmschacht oberhalb der Prozeßgasabführungsleitung verbunden ist. Bei einer derartigen Ausbildung kann der Vorwärmschacht eine geringere lichte Weite aufweisen, als der Schmelzreaktor, wodurch die gewünschte Gaszirkulation verbessert werden kann. Im Vorwärmschacht können hiebei, wie eingangs erwähnt, Schleusen angeordnet sein, über welche der Reinschrott in den Schmelzreaktor eingebracht wird. Zur Aufrechterhaltung des gewünschten Unterdruckes im Schmelzreaktor ist die Schleuse für die Aufgabe des Shredderschrottes bevorzugt als Doppelschleuse ausgebildet, wobei in vorteilhafter Weise in oder nahe der Doppelschleuse wenigstens ein Rauchwächter und/oder ein Heizdraht-Anemometer angeordnet ist. Mittels eines derartigen Rauchwächters und/oder Heizdraht-Anemometers kann das Ausmaß der Verbrennung im Schmelzreaktor überwacht werden und insbesondere bei Auftreten von Rauchbildung durch Einlassen von Sekundärluft die entsprechende Sauerstoffbilanz für die Umsetzung der Prozeßgase gewährleistet werden.

Insgesamt kann durch entsprechend Falschluft- bzw. Sekundärluftzufuhr im Schmelzreaktor und im besonderen im Bereich der Doppelschleuse für die Aufgabe des Shredderschrottes die Gaszusammensetzung des Prozeßgases kurzfristig trotz unterschiedlicher Zusammensetzung des Aufgabematerials eingestellt werden, wobei durch Einpressen von Falschluft in den Vorwärmschacht die gewünschten Druckverhältnisse aufrechterhalten werden können. Die Druckverhältnisse zur Erzielung der gewünschten Gaszirkulation des weitestgehend inerten heißen Abgases des Raffinators können durch Anordnung von Sauggebläsen in der Prozeßgasab-führungsleitung und in der Abgasabführungsleitung am Kopf des Vorwärmschachtes unterstützt werden.

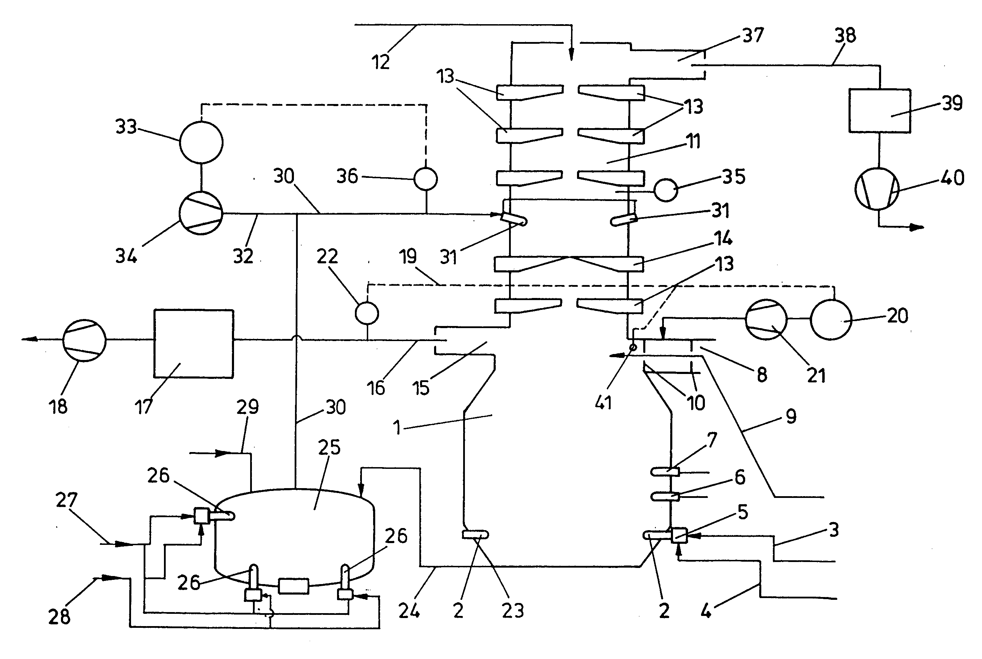

Die Erfindung wird nachfolgend an Hand eines in der Zeichnung schematisch dargestellten Ausführungsbeispieles einer für die Durchführung des erfindungsgemäßen Verfahrens geeigneten Vorrichtung näher erläutert.

In der Zeichnung ist mit 1 ein Schmelzreaktor bezeichnet, welcher mit Erdgas-Luft-Brennern 2 beheizt wird. Die Zuführungsleitungen für Erdgas und Luft sind hiebei mit 3 und 4 bezeichnet, wobei die Mischkammer zum Vermischen der Gase schematisch mit 5 bezeichnet ist. Über der Zone mit den Erdgas-Luft-Brennern 2 weist der Schmelzreaktor 1 zwei Sekundärluftebenen auf, in welche Sekundärluftdüsen 6 und 7 münden. Am Kopf des Schmelzreaktors 1 ist eine Eintragsöffnung 8 für Shredderschrott vorgesehen. Der Shredderschrott wird hiebei über eine kontinuierliche Zuführung 9 eingetragen. Der Eintrag 8 für den Shredderschrott ist mit einem Doppelschleusensystem 10 versehen, um ein ungezieltes Hineinfallen des Shredderschrottes in den Schmelzreaktor und die Veränderung der gezielt in dem Reaktor eingestellten Druckverhältnisse zu verhindern. Zusätzlich zu dem über den Eintrag 8 eingetragenen Shredderschrott wird in den Schmelzreaktor 1 über eine Vorwärmsäule 11 Reinschrott in den Schmelzreaktor eingetragen. Der Reinschrott wird hiebei über die Zuführung 12 der Vorwärmsäule 11 aufgegeben. In der Vorwärmsäule 11 sind Einrichtungen 13, wie beispielsweise Gabeln und dichte Böden vorgesehen, welche ein ungehindertes Durchfallen des Reinschrottes in den Schmelzreaktor 1 und die Veränderung der gezielt in dem Reaktor eingestellten Druckverhältnisse verhindern sollen. Zusätzlich zu diesen Einbauten 13 weist die Vorwärmsäule 11 auch ein Schleusensystem 14 auf, durch welches der Eintrag des Reinschrottes in den Schmelzreaktor 1 gezielt gesteuert werden kann.

Shredderschrott und Reinschrott werden in der Schmelzzone des Schmelzreaktors 1 aufgeschmolzen und das hiebei entstehende Prozeßgas wird oberhalb des Schmelzbades am Kopf des Schmelzreaktors 1 bei einer Abzugseinrichtung 15 aus dem Reaktor abgezogen. Das abgezogene Prozeßgas wird in der Folge über eine Leitung 16 einem schematisch dargestellten Thermoreaktor 17 zugeführt und aus diesem mit einem Saugzuggebläse 18 abgezogen. Über eine Zweigleitung 19 in der Prozeßgasleitung 16 wird ein Teil des Prozeßgases über ein weiteres mit einem entsprechenden Motor 20 versehenes Gebläse 21 der Aufgabeeinrichtung 8 für den Shredderschrott rückgeführt. In diese Zweigleitung 19 der Prozeßgasleitung 16 können hiebei Meßeinrichtungen 22 eingeschaltet sein. Diese Meßeinrichtungen dienen beispielsweise zur Überwachung der Sauerstoffbilanz des Prozeßgases.

Am Boden des Schmelzreaktors 1 befindt sich ein sche-matisch angedeuteter Abstich 23 für die Metallschmelze und die Schlacke. Das geschmolzene Material wird in der Folge über eine Leitung 24 einem Raffinator 25 zugeführt. In dem Raffinator 25 wird das aus dem Schmelzreaktor 1 abgezogene flüssige Material entsprechend den Erfordernissen entschwefelt, entphosport, reduziert, überhitzt sowie gegebenenfalls der Badkohlenstoffgehalt entsprechend eingestellt. Zu diesem Zweck weist der Raffinator geeignete Brenner 26 auf, welche über die Leitungen 27 und 28 wahlweise mit Sauerstoff und Kohlenstoff bzw. Sauerstoff und entsprechenden Brennstoffen betrieben werden können. Zusätzlich dazu mündet in den Raffinator 25 eine Leitung 29, welche für die Zufuhr von Falschluft gedacht ist. Die heißen Abgase des Raffinators 25 werden über eine Abgasleitung 30 über entsprechende Einblasdüsen 31 in die Vorwärmzone 11 für den Reinschrott rückgeführt. Durch die Rückführung der Raffinatorabgase in die Vorwärmzone soll hiebei in der Vorwärmzone 11 ein gegenüber dem Schmelzreaktor 1 höherer Druck aufrechterhalten werden. Um die Druckeinstellung in der Vorwärmzone sicherzustellen, weist die Raffinatorabgasleitung 30 eine Zweigleitung 32 auf, welche ein mit einem Motor 33 versehenes Saugluftgebläse 34 aufweist. Durch Einstellung des Falschluftgehaltes in der Raffinatorabgasleitung 30 kann der gewünschte Druck in der Vorwärmzone aufrechterhalten werden. Die Vorwärmzone ist hiezu mit entsprechenden Druckmeßfühlern 35 versehen. Um insbesondere bei Zuführung von Falschluft in die Raffinatorabgasleitung 30 ein entsprechendes Temperaturniveau aufrechtzuhalten, wird die Raffinatorabgasleitung 30 zusätzlich mit einer Temperaturkontrolleinrichtung 36 versehen.

Die durch die Vorwärmzone 11 geleiteten Raffinatorabgase werden in der Folge über eine Abgasabzugseinrichtung 37, und eine Abgasleitung 38 einer Abgasreinigung 39 zugeführt. Nach Reinigung der Abgase in der Abgasreinigung 39 werden die entsprechend gereinigten Abgase mit Hilfe eines Saugzuggebläses 40 aus dem System ausgetragen.

Um die gewünschte Druckdifferenz zwischen dem Schmelzreak-tor 1 und der Vorwärmzone 11 aufrechtzuerhalten, werden daher über eine nicht gezeigte Regeleinrichtung entsprechende Mengen Prozeßgas aus dem Schmelzreaktor abgezogen und entsprechend höhere Mengen an gegebenenfalls mit Falschluft verdünntem Raffinatorabgas der Vorwärmzone 11 zugeführt.

Da die Zusammensetzung des über den Eintrag 8 eingebrachten Shredderschrotts nicht konstant ist, ist es erforderlich, die Reaktionsbedingung bzw. das Ausmaß der Verbrennung in dem Schmelzreaktor kontinuierlich zu überprüfen. Zu diesem Zweck sind neben Temperatur- und Druckfühlern in dem Schmelzreaktor auch schematisch dargestellte Heizgas-Anemometer oder Rauchmelder 41 vorgesehen. Bei Anzeigen eines zu hohen Abgaswertes bzw. einer zu großen Rauchmenge in dem Schmelzreaktor wird in der Folge durch Zufuhr von erhöhten Mengen an Sekundär- bzw. Falschluft der Reaktor auf die momentan erforderlichen Reaktionsbedingungen bzw. für die Aufrechterhaltung des Reaktionsverfahrens erforderlichen Druckbedingungen eingestellt.

## Patentansprüche

1. Verfahren zum kontinuierlichen Schmelzen von Schrott unter Verwendung von Shredderschrott in einem Schachtofen (1), wobei das Metallbad und die Schlacke einem Raffinationsprozeß (25) zugeführt werden und die heißen Abgase des Raffinationsprozesses einer Vorwärmzone des Schachtofens (1) zugeführt werden, dadurch gekennzeichnet, daß der Shredderschrott oberhalb der Schmelzzone über eine Schleuse (10) eingetragen wird, daß die heißen Abgase des Raffinationsprozesses (25) oberhalb der Schleuse (10) für die Aufgabe des Shredderschrottes in den Vorwärmschacht (11) für Reinschrott rückgeführt werden, daß der Reinschrott über den Vorwärmschacht (11) in die Schmelzzone eingebracht wird und daß die Prozeßgase des Schmelzprozesses unterhalb des Vorwärmschachtes (11) abgezogen werden.

2. Verfahren nach Anspruch 1, dadurch gekennzeichnet, daß der Gasdruck über dem Metallbad in der Schmelzzone geringer gehalten wird als der Gasdruck der in den Vorwärmschacht (11) rückgeführten Abgase des Raffinationsprozesses (25).

3. Verfahren nach Anspruch 1 oder 2, dadurch gekennzeichnet, daß die Prozeßgase oberhalb des Schmelzbades aus der Schmelzzone abgesaugt werden, daß aus dem Vorwärmschacht (11) am oberen Ende (37) Abgase abgesaugt werden und daß die Abgase des Raffinationsprozesses (25) in den Vorwärmschacht (11) zwischen den Absaugstellen (15,37) rückgeführt werden.

4. Verfahren nach Anspruch 1, 2 oder 3, dadurch gekennzeichnet, daß der Gasdruck oberhalb des Schmelzbades überwacht wird und die Saugleistung für die Absaugung des Prozeßgases und/oder der Druck in der Abgasrückführungsleitung in Abhängigkeit von dem gemessenen Gasdruck geregelt wird.

5. Verfahren nach einem der Ansprüche 1 bis 4, dadurch gekennzeichnet, daß der Schachtofen (1) im Bereich der Schmelzzone mit unterstöchiometrischen Brennern (2) betrieben wird und daß im Bereich der Schleuse (10) für die Aufgabe des Shredderschrottes Sekundärluft zur Kühlung der Prozeßgase und nachfolgenden Umsetzung zu CO₂ zugeführt wird.

6. Verfahren nach einem der Ansprüche 1 bis 5, dadurch gekennzeichnet, daß die Druckdifferenzregelung für die Aufrechterhaltung eines höheren Gasdruckes der in den Vorwärmschacht (11) rückgeführten Abgase prioritär gegenüber der Regelung der Sekundärluftzuführung zur Erzielung stöchiometrischer oder überstöchiometrischer Bedingungen im Prozeßgas gefahren wird.

7. Vorrichtung zur Durchführung des Verfahrens nach einem der Ansprüche 1 bis 6, mit einem als Schachtofen (1) ausgebildeten Schmelzreaktor und einem dem Schlacken- und Badabstich (23) nachgeschalteten Raffinator (25), wobei eine Gasrückführungsleitung (30) für Abgase des Raffinators (25) in den Schachtofen (1) mündet, dadurch gekennzeichnet, daß der obere Bereich des Schachtofens (1) als Vorwärmschacht (11) für Reinschrott ausgebildet ist, daß unterhalb des Vorwärmschachtes (11) wenigstens eine Schleuse (10) für das Einbringen von Shredderschrott und eine Prozeßgasabführungsleitung (15) angeschlossen ist und daß die Gasrückführungsleitung (30) mit dem Vorwärmschacht (11) oberhalb der Prozeßgasabführungsleitung (15) verbunden ist.

8. Vorrichtung nach Anspruch 7, dadurch gekennzeichnet, daß im Vorwärmschacht (11) Schleusen (14) angeordnet sind, über welche der Reinschrott in den Schmelzreaktor (1) eingebracht wird.

9. Vorrichtung nach Anspruch 7 oder 8, dadurch gekennzeichnet, daß die Schleuse (10) für die Aufgabe des Shredderschrottes als Doppelschleuse ausgebildet ist.

10. Vorrichtung nach Anspruch 7, 8 oder 9, dadurch gekennzeichnet, daß in oder nahe der Doppelschleuse (10) wenigstens ein Rauchwächter und/oder ein Heizdraht-Anemometer (41) angeordnet ist.

## Claims

1. Process for the continuous melting of scrap using shredded scrap in a shaft furnace (1) with the metal bath and the slag being fed to a refining process (25) and the hot waste gases of the refining process being fed to a preheating zone of the shaft furnace (1), characterized in that the shredded scrap above the melting zone is carried in via a sluice (10), in that the hot waste gases of the refining process (25) above the sluice (10) are returned for feeding the shredded scrap into the preheating shaft (11) for pure scrap, in that the pure scrap is brought into the melting zone via the preheating shaft (11) and in that the process gases of the melting process are withdrawn below the preheating shaft (11).

2. Process according to claim 1, characterized in that the gas pressure over the metal bath in the melting zone is kept lower than the gas pressure of the waste gases of the refining process (25) which have been returned to the preheating shaft (11).

3. Process according to claim 1 or 2, characterized in that the process gases above the melting bath are drawn off by suction from the melting zone, in that waste gases are drawn off by suction from the preheating shaft (11) at the upper end (37) and in that the waste gases of the refining process (25) are brought back into the preheating shaft (11) between the suction removal points (15, 37).

4. Process according to claim 1, 2 or 3, characterized in that the gas pressure above the melting bath is monitored and the suction capacity for sucking off the process gas and/or the pressure in the waste gas return line is regulated in accordance with the measured gas pressure.

5. Process according to one of claims 1 to 4, characterized in that the shaft furnace (1) is operated in the area of the melting zone with understoichiometric burners (2) and in that in the area of the sluice (10) for feeding the shredded scrap secondary air is supplied for cooling the process gases and subsequent conversion to CO₂.

6. Process according to one of claims 1 to 5, characterized in that the regulation of the pressure difference for maintaining a higher gas pressure of the waste gases returned to the preheating shaft (11) is operated so that it takes priority in relation to the regulation of the secondary air supply for achieving stoichiometric or overstoichiometric conditions in the process gas.

7. Apparatus for carrying out the process according to one of claims 1 to 6 with a melting reactor constructed as a shaft furnace (1) and a refining unit (25) located after the slag and bath tapping (23) with a gas return line (30) for waste gases of the refining unit (25) opening out into the shaft furnace (1), characterized in that the upper area of the shaft furnace (1) is constructed as a preheating shaft (11) for pure scrap, in that under the preheating shaft (11) at least one sluice (10) for bringing in shredded scrap and a process gas discharge line (15) is connected and in that the gas return line (30) is connected to the preheating shaft (11) above the process gas discharge line (15).

8. Apparatus according to claim 7, characterized in that sluices (14) are disposed in the preheating shaft (11), via which the pure scrap is brought into the melting reactor (1).

9. Apparatus according to claim 7 or 8, characterized in that the sluice (10) for feeding the shredded scrap is constructed as a double sluice.

10. Apparatus according to claim 7, 8 or 9, characterized in that at least one smoke monitor and/or a heating wire anemometer is disposed in or near the double sluice (10).

## Revendications

1. Procédé pour la fusion continue de ferrailles par l'utilisation de ferrailles Shredder dans un four à cuve (1), le bain métallique et le laitier étant soumis à un processus d'affinage et les gaz brûlés chauds dégagés par le processus d'affinage étant envoyés dans une zone de préchauffage du four à cuve (1), caractérisé en ce que la ferraille Shredder est introduite par un sas (10) situé au-dessus de la zone de fusion, que les gaz brûlés chauds provenant du processus d'affinage (25) sont renvoyés dans la cuve de préchauffage (11) pour la ferraille pure au-dessus du sas (10) pour l'introduction de la ferraille Shredder, que la ferraille pure est chargée dans la zone de fusion par la cuve de préchauffage (11) et que les gaz du processus de fusion sont évacués au-dessous de la cuve de préchauffage (11).

2. Procédé selon la revendication 1, caractérisé en ce que le gaz au-dessus du bain métallique dans la zone de fusion est maintenu à une pression inférieure à la pression des gaz brûlés du processus d'affinage (25) renvoyés dans la cuve de préchauffage (11).

3. Procédé selon la revendication 1 ou 2, caractérisé en ce que les gaz de process sont évacués par aspiration de la zone de fusion au-dessus du bain de fusion, que des gaz brûlés sont aspirés de la cuve de préchauffage (11) à l'extrémité supérieure (37) et que les gaz brûlés du processus d'affinage (25) sont renvoyés dans la cuve de préchauffage (11) entre les points d'aspiration (15, 37).

4. Procédé selon la revendication 1, 2 ou 3, caractérisé en ce qu'on contrôle la pression de gaz au-dessus du bain de fusion et que le débit d'aspiration des gaz de process et/ou la pression dans le conduit de retour des gaz brûlés sont réglés en fonction de la pression de gaz mesurée.

5. Procédé selon l'une des revendications 1 à 4, caractérisé en ce que le four à cuve (1) fonctionne dans la zone de fusion à l'aide de brûleurs hypostoechiométriques (2) et que de l'air secondaire pour le refroidissement des gaz de process et leur posttransformation en CO₂ est introduit au niveau du sas (10) pour le chargement de la ferraille Shredder.

6. Procédé selon l'une des revendications 1 à 5, caractérisé en ce que la pression différentielle peur le maintien d'une plus grande pression des gaz brûlés renvoyés dans la cuve de préchauffage (11) est réglée prioritairement par rapport à la régulation de l'alimentation d'air secondaire pour l'obtention de conditions stöchiométriques ou hyperstoechiométriques dans le gaz de process.

7. Dispositif pour la mise en oeuvre du procédé selon l'une des revendications 1 à 6, comprenant un réacteur de fusion en forme d'un four à cuve (1) et un appareil d'affinage (25) monté en aval de la coulée du laitier et du bain (23), une conduite de retour des gaz brûlés (30) provenant de l'appareil d'affinage (25) débouchant dans le four à cuve (1), caractérisé en ce que la partie supérieure du four à cuve (1) sert de cuve de préchauffage (11) pour la ferraille pure, qu'un sas (10) au moins pour l'introduction de la ferraille Shredder et un conduit d'évacuation des gaz de process (15) sont branchés au-dessous de la cuve de préchauffage (11) et que le conduit de retour des gaz (30) est relié à la cuve de préchauffage (11) au-dessus du conduit d'évacuation des gaz de process (15).

8. Dispositif selon la revendication 7, caractérisé en ce que des sas (14) pour l'introduction de la ferraille pure dans le réacteur de fusion (1) sont disposés dans la cuve de préchauffage (11).

9. Dispositif selon la revendication 7 ou 8, caractérisé que le sas (10) pour le chargement de la ferraille Shredder est constitué par un double sas.

10. Dispositif selon la revendication 7, 8 ou 9, caractérisé en ce qu'au moins un détecteur de fumées et/ou un anémomètre (41) à filament chauffant est disposé dans ou à proximité du double sas (10).
